(19) Europäisches Patentamt

European Patent Office

Office européen des brevets

(11) **EP 0 923 474 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(21) Anmeldenummer: 98933493.3

(22) Anmeldetag: **09.05.1998**

(51) Int Cl.⁷: **B60T 8/00**

(86) Internationale Anmeldenummer:
**PCT/DE98/01299**

(87) Internationale Veröffentlichungsnummer:
**WO 99/001321 (14.01.1999 Gazette 1999/02)**

(54) **VERFAHREN UND VORRICHTUNG ZUR REGELUNG EINER DIE FAHRZEUGBEWEGUNG REPRÄSENTIERENDEN BEWEGUNGSGRÖSSE**

METHOD AND DEVICE FOR REGULATING A QUANTITY OF MOTION REPRESENTING THE MOVEMENT OF A VEHICLE

PROCEDE ET DISPOSITIF POUR LE REGLAGE D'UNE GRANDEUR REPRESENTATIVE DU MOUVEMENT D'UN VEHICULE

(84) Benannte Vertragsstaaten:
**DE FR GB IT SE**

(30) Priorität: **02.07.1997 DE 19728095**
**06.11.1997 DE 19749058**

(43) Veröffentlichungstag der Anmeldung:
**23.06.1999 Patentblatt 1999/25**

(73) Patentinhaber: **ROBERT BOSCH GMBH**
**70442 Stuttgart (DE)**

(72) Erfinder:
• **MERGENTHALER, Rolf-Hermann**
**D-71229 Leonberg (DE)**
• **URBAN, Werner**
**D-71665 Vaihingen (DE)**

(56) Entgegenhaltungen:
**EP-A- 0 716 000        GB-A- 2 280 651**
**US-A- 5 446 658**

**Beschreibung**

Stand der Technik

Die Erfindung betrifft ein Verfahren und eine Vorrichtung zur Regelung einer die Fahrzeugbewegung repräsentierenden Bewegungsgröße, bei dem bzw. bei der festgestellt wird, ob sich das Fahrzeug auf einer quer zur Fahrtrichtung des Fahrzeuges geneigten Fahrbahn befindet. Die Feststellung, ob sich das Fahrzeug auf einer quer zur Fahrtrichtung des Fahrzeuges geneigten Fahrbahn befindet, wird wenigstens ausgehend von Größen durchgeführt, die für die Überwachung von in dem Fahrzeug eingesetzten Sensoren erforderlich sind.

Vorrichtungen und Verfahren zur Überwachung von in einem Fahrzeug eingesetzten Sensoren sind aus dem Stand der Technik in vielerlei Modifikationen bekannt.

Die unter dem Aktenzeichen P 196 36 443 beim Deutschen Patentamt eingereichte Anmeldung beschreibt ein Verfahren bzw. eine Vorrichtung zur Überwachung von Sensoren in einem Fahrzeug, welche Signale erzeugen, die jeweils unterschiedliche physikalische Größen repräsentieren. Die Vorrichtung enthält Mittel, mit denen für wenigstens zwei Sensoren, ausgehend von wenigstens den von ihnen erzeugten Signalen, für die Sensoren gleich definierte Vergleichsgrößen ermittelt werden. Ferner enthält die Vorrichtung weitere Mittel, mit denen in Abhängigkeit von wenigstens den ermittelten gleich definierten Vergleichsgrößen, eine Referenzgröße ermittelt wird. Ausgehend von wenigstens der ermittelten Referenzgröße wird in Überwachungsmitteln wenigstens für einen Sensor eine Überwachung durchgeführt. Neben den Überwachungsmitteln enthält die Vorrichtung zusätzliche Mittel, mit denen wenigstens für einen Sensor eine Korrektur des von ihm erzeugten Signals, wenigstens in Abhängigkeit von der Referenzgröße, durchgeführt wird.

Die Vorrichtung bzw. das Verfahren zur Überwachung von Sensoren in einem Fahrzeug enthält ferner eine Steilwandkurvenerkennung. Hierzu wird die korrigierte Giergeschwindigkeit unter Berücksichtigung der Fahrzeuggeschwindigkeit in eine Querbeschleunigung umgerechnet. Ausgehend von einem Vergleich zwischen der umgerechneten Querbeschleunigung und einer gemessenen und offsetkorrigierten Querbeschleunigung kann festgestellt werden, ob das Fahrzeug eine Steilwandkurve durchfährt.

Verfahren und Vorrichtungen zur Feststellung, ob sich ein Fahrzeug auf einer quer zur Fahrtrichtung des Fahrzeuges geneigten Fahrbahn befindet, sind aus dem Stand der Technik in vielerlei Modifikationen bekannt.

Die unter dem Aktenzeichen P 197 08 508 beim Deutschen Patentamt eingereichte Anmeldung beschreibt ein Verfahren bzw. eine Vorrichtung, mit dem bzw. mit der eine von der Fahrbahnquerneigung abhängige Querbeschleunigungskomponente ermittelt wird und/oder mit dem bzw. mit der die Querbeschleunigung des Fahrzeuges wenigstens in Abhängigkeit von der Querbeschleunigungskomponente korrigiert wird. Bei dem Verfahren bzw. bei der Vorrichtung wird zunächst ausgehend von verschiedenen Abfragen ermittelt, ob eine Steilwandkurvenbedingung erfüllt ist oder nicht. Zur Ermittlung, ob die Steilwandkurvenbedingung erfüllt ist, wird beispielsweise mit Hilfe einer Abfrage, ausgehend von der Schwingwinkeländerung und der Gierate des Fahrzeuges ermittelt, ob das Fahrzeug übersteuert oder nicht. In einer weiteren Abfrage wird überprüft, ob der Fahrer durch Eingriffe in die Lenkung bzw. in die Bremse versucht, das Fahrzeug zu stabilisieren. Ist die Steilwandbedingung erfüllt, so wird wenigstens in Abhängigkeit des an der Hinterachse des Fahrzeuges auftretenden Schräglaufwinkels ein Fahrzeugzustand festgestellt, bei dem die von der Fahrbahnquerneigung abhängige Querbeschleunigungskomponente ermittelt wird. Die so ermittelte von der Fahrbahnquerneigung abhängige Querbeschleunigungskomponente wird auf Plausibilität hin überprüft und zur Korrektur der Querbeschleunigung bzw. der Gierate des Fahrzeuges verwendet.

Verfahren und Vorrichtungen zur Regelung einer die Fahrzeugbewegung repräsentierenden Bewegungsgröße sind aus dem Stand der Technik in vielerlei Modifikationen bekannt.

Ein Verfahren bzw. eine Vorrichtung zur Regelung der Fahrdynamik eines Fahrzeuges ist beispielsweise aus der in der Automobiltechnischen Zeitschrift (ATZ) 16, 1994, Heft 11, auf den Seiten 674 - 689 erschienen Veröffentlichung "FDR-die Fahrdynamikregelung von Bosch" bekannt. Gleichzeitig zeigt diese Veröffentlichung, daß im Fahrdynamikregler verschiedene Sondersituationen, wie zum Beispiel eine geneigte Fahrbahn, in der Regelung mitberücksichtigt werden.

Aus der US 5,446,658 sind ein Verfahren und eine Vorrichtung zur Schätzung des Längsneigungswinkels und des Querneigungswinkels einer Fahrbahnoberfläche bekannt. Zur Ermittlung des Querneigungswinkels werden durch Sensoren die Drehzahlen der Hinterräder sowie die Querbeschleunigung des Fahrzeugs erfasst. Aus den Drehzahlen der Hinterräder wird die Längsgeschwindigkeit ermittelt, aus der Querbeschleunigung wird der Wankwinkel ermittelt und aus den Raddrehzahlen der Hinterräder sowie dem Radstand wird die Gierrate ermittelt. Der Querneigungswinkel der Fahrbahn wird nun aus der Längsgeschwindigkeit, der Querbeschleunigung, dem Wankwinkel sowie der Gierrate berechnet.

Die Merkmale der Oberbegriffe der unabhängigen Ansprüche sind der US 5,446,658 entnommen.

Die Aufgabe der vorliegenden Erfindung besteht darin, die in einer Vorrichtung bzw. die in einem Verfahren zur Überwachung von Sensoren in einem Fahrzeug enthaltene Steilwandkurvenerkennung zu verbessern.

Diese Aufgabe wird durch die Merkmale des Anspruches 1 bzw. durch die des Anspruches 10 gelöst.

Vorteile der Erfindung

Ein Vorteil der Erfindung gegenüber dem eingangs genannten Stand der Technik ist der, daß bei der erfindungsgemäßen Vorrichtung bzw. dem erfindungsgemäßen Verfahren zur Feststellung, ob sich ein Fahrzeug auf einer quer zur Fahrtrichtung des Fahrzeuges geneigten Fahrbahn befindet, hierfür Signale bzw. Größen verwendet werden können, die bereits ausgehend von einer Überwachung der in einem Fahrzeug eingesetzten Sensoren vorhanden sind.
Die erfindungsgemäße Vorrichtung zur Regelung einer die Fahrzeugbewegung repräsentierenden Bewegungsgröße, wobei bei der Regelung der Bewegungsgröße eine durch dritte Mittel festgestellte quer zur Fahrrichtung des Fahrzeugs geneigte Fahrbahn berücksichtigt wird, umfasst

- erste Mittel zur Erfassung verschiedener, die Fahrzeugbewegung beschreibender Größen.

Der Kern der Erfindung besteht darin,

- dass zweite Mittel enthalten sind, mit denen wenigstens ausgehend von den mit den ersten Mitteln erfaßten, verschiedenen, die Fahrzeugbewegung beschreibenden Größen, für wenigstens zwei der ersten Mittel gleich definierte Vergleichsgrößen ermittelt werden, und
- dass zur Feststellung, ob sich das Fahrzeug auf einer quer zur Fahrtrichtung des Fahrzeuges geneigten Fahrbahn befindet, in den dritten Mitteln wenigstens ausgehend von den wenigstens zwei gleich definierten Vergleichsgrößen Plausibilitätsabfragen durchgeführt werden.

Von besonderem Vorteil ist es, wenn das Ergebnis der mit den dritten Mitteln durchgeführten Feststellung bei der Ermittlung der gleich definierten Vergleichsgrößen berücksichtigt wird, und/oder wenn das Ergebnis der mit den dritten Mitteln durchgeführten Feststellung in den dritten Mitteln zur Überwachung wenigstens eines der ersten Mittel berücksichtigt wird, und/oder wenn das Ergebnis der mit den dritten Mitteln durchgeführten Feststellung in vierten Mitteln, die wenigstens ausgehend von den mit den ersten Mitteln erfaßten, verschiedenen, die Fahrzeugbewegung beschreibenden Größen, zur Regelung der die Fahrzeugbewegung repräsentierenden Bewegungsgröße, wenigstens Ansteuersignale für Aktuatoren erzeugen, mit denen wenigstens die auf die Räder des Fahrzeuges wirkenden Vortriebs- und/oder Bremsmomente beeinflußt werden, berücksichtigt wird.
Von besonderem Vorteil ist es, wenn die mit den zweiten Mitteln ermittelten, gleich definierten Vergleichsgrößen, eine physikalische Größe bzw. eine die Fahrzeugbewegung beschreibende Größe repräsentieren, die vorzugsweise einer, mit einem der im Fahrzeug enthaltenen ersten Mitteln erfaßten Größe, insbesondere einer Giergeschwindigkeit, entspricht.
Vorteilhafterweise werden in den dritten Mitteln folgende Plausibilitätsabfragen durchgeführt bzw. werden für die Plausibilitätsabfragen folgende Größen ermittelt:
Ausgehend von den gleich definierten Vergleichsgrößen wird wenigstens eine Plausibilitätsabfrage durchgeführt, mit der festgestellt wird, ob die gleich definierten Vergleichsgrößen in Abhängigkeit ihres Wertes entsprechend wenigstens einer vorgegebenen Anordnung angeordnet sind. Hierbei beschreibt die wenigstens eine vorgegebene Anordnung eine Kurvenfahrt auf einer quer zur Fahrtrichtung des Fahrzeuges geneigten Fahrbahn. Ausgehend von den gleich definierten Vergleichsgrößen wird wenigstens eine Größe ermittelt, die die Abweichung der gleich definierten Vergleichsgrößen untereinander beschreibt. Ferner wird eine Größe ermittelt, die die zeitliche Änderung der Differenz beschreibt, die aus einer Größe, die die am Fahrzeug angreifende Querbeschleunigung beschreibt, und einer Vergleichsgröße für die Querbeschleunigung gebildet wird. Zur Feststellung, ob sich das Fahrzeug auf einer quer zur Fahrtrichtung des Fahrzeuges geneigten Fahrbahn befindet, wird wenigstens das Ergebnis der wenigstens einer Plausibilitätsabfrage und/oder die Größe, die die Abweichung der gleich definierten Vergleichsgrößen untereinander beschreibt und/oder die Größe, die die zeitliche Änderung der Differenz beschreibt, die aus der Größe, die die am Fahrzeug angreifende Querbeschleunigung beschreibt, und der Vergleichsgröße für die Querbeschleunigung gebildet wird, berücksichtigt.
Vorteilhafterweise wird die Vergleichsgröße für die Querbeschleunigung ausgehend von einer die Fahrzeuggeschwindigkeit beschreibenden Größe und einer Referenzgröße, die wenigstens ausgehend von den gleich definierten Vergleichsgrößen gebildet wird, ermittelt. Dabei repräsentiert die ermittelte Referenzgröße eine physikalische Größe, die vorzugsweise einer, mit einem der im Fahrzeug enthaltenen ersten Mittel erfaßten Größe, insbesondere einer Giergeschwindigkeit, entspricht.
Zur Bildung der Größe, die die Abweichung der gleich definierten Vergleichsgrößen untereinander beschreibt, wird vorteilhafterweise für jede der gleich definierten Vergleichsgrößen jeweils eine Größe ermittelt, die die Abweichung dieser gleich definierten Vergleichsgröße zu den anderen gleich definierten Vergleichsgrößen beschreibt. Von besonderem Vorteil ist es, wenn für die Bildung der Größe, die die Abweichung der gleich definierten Vergleichsgrößen untereinander beschreibt, für einen Teil der gleich definierten Vergleichsgrößen für jede dieser gleich definierten Vergleichsgrößen dieses Teils der gleich definierten Vergleichsgrößen jeweils eine Größe ermittelt wird, die die Abweichung dieser gleich definierten Vergleichsgröße zu den anderen gleich definierten Vergleichsgrößen dieses Teils der gleich definierten Vergleichsgrößen beschreibt.

Ein weiterer Vorteil besteht darin, daß die Größe, die die zeitliche Änderung der Differenz beschreibt, die aus der Größe, die die am Fahrzeug angreifende Querbeschleunigung beschreibt und der Vergleichsgröße für die Querbeschleunigung gebildet wird, als Zähler realisiert ist. Dieser Zähler wird erhöht, wenn die zeitliche Änderung größer als ein erster Schwellenwert ist. Er wird erniedrigt, wenn die zeitliche Änderung kleiner als ein zweiter Schwellenwert ist und er wird an einen vorgegebenen Wert, insbesondere 0 herangeführt, wenn die Differenz zeitlich nahezu unverändert bleibt.

Ob sich das Fahrzeug auf einer quer zur Fahrtrichtung des Fahrzeuges geneigten Fahrbahn befindet, wird vorteilhafterweise mit Hilfe eines Zählers festgestellt. Ist der Zähler größer als ein vorgegebener Schwellenwert, so befindet sich das Fahrzeug auf einer quer zur Fahrtrichtung des Fahrzeuges geneigten Fahrbahn. Vorteilhafterweise wird der Zähler wenigstens in Abhängigkeit folgender Bedingungen erhöht: Die wenigstens eine vorgegebene Anordnung der gleich definierten Vergleichsgrößen liegt vor und/oder die die Abweichung der gleich definierten Vergleichsgrößen untereinander beschreibende Größe ist größer als ein erster Schwellenwert oder der Betrag der Größe, die die zeitliche Änderung der Differenz beschreibt, die aus der Größe, die die am Fahrzeug angreifende Querbeschleunigung beschreibt und der Vergleichsgröße für die Querbeschleunigung gebildet wird, ist größer als ein zweiter Schwellenwert. Vorteilhafterweise wird der Zähler wenigstens in Abhängigkeit folgender Bedingungen erniedrigt: Keine der vorgegebenen Anordnungen der gleich definierten Vergleichsgrößen liegt vor und/oder die die Abweichung der gleich definierten Vergleichsgrößen untereinander beschreibende Größe ist kleiner als ein erster Schwellenwert und der Betrag der Größe, die die zeitliche Änderung der Differenz beschreibt, die aus der Größe, die die am Fahrzeug angreifende Querbeschleunigung beschreibt und der Vergleichsgröße für die Querbeschleunigung gebildet wird, ist kleiner als ein zweiter Schwellenwert.

Weiterhin hat sich als vorteilhaft erwiesen, daß die Feststellung, ob sich das Fahrzeug auf einer quer zur Fahrtrichtung des Fahrzeuges geneigten Fahrbahn befindet, nur durchgeführt wird, wenn die die Fahrzeuggeschwindigkeit beschreibende Größe größer als ein zugehöriger Schwellenwert ist und/oder wenn der Betrag einer ersten gleich definierten Vergleichsgröße größer als der Betrag einer zweiten gleich definierten Vergleichsgröße ist.

Weitere Vorteile sowie vorteilhafte Ausgestaltungen können den Unteransprüchen, der Zeichnung sowie der Beschreibung des Ausführungsbeispieles entnommen werden.

Zeichnung

Die Zeichnung besteht aus den Figuren 1 bis 4. In Figur 1 ist zum einen die in einer Vorrichtung zur Regelung einer die Fahrzeugbewegung repräsentierenden Bewegungsgröße, insbesondere die in einem System zur Regelung der Fahrdynamik eines Fahrzeuges verwendete Sensorik bzw. Aktuatorik dargestellt. Zum anderen zeigt Figur 1 die Strukturierung des in diesem System verwendeten Steuergerätes, unter Berücksichtigung der erfindungsgemäßen Vorrichtung. Figur 2 zeigt mit Hilfe eines Flußdiagrammes die Ermittlung der Größe, die die zeitliche Änderung der Differenz beschreibt, die aus der Größe, die die am Fahrzeug angreifende Querbeschleunigung beschreibt und der Vergleichsgröße für die Querbeschleunigung gebildet wird. In den Figuren 3a bzw. 3b ist jeweils mit Hilfe eines Flußdiagrammes eine Plausibilitätsabfrage dargestellt, mit der festgestellt wird, ob die gleich definierten Vergleichsgrößen in Abhängigkeit ihres Wertes entsprechend einer vorgegebenen Anordnung angeordnet sind. In Form eines Flußdiagrammes sind in Figur 4 die Plausibilitätsabfragen dargestellt, mit denen festgestellt wird, ob sich das Fahrzeug auf einer quer zur Fahrtrichtung des Fahrzeuges geneigten Fahrbahn befindet.

Es sei darauf hingewiesen, daß Blöcke mit derselben Bezeichnung in unterschiedlichen Figuren die selbe Funktion haben.

Ausführungsbeispiel

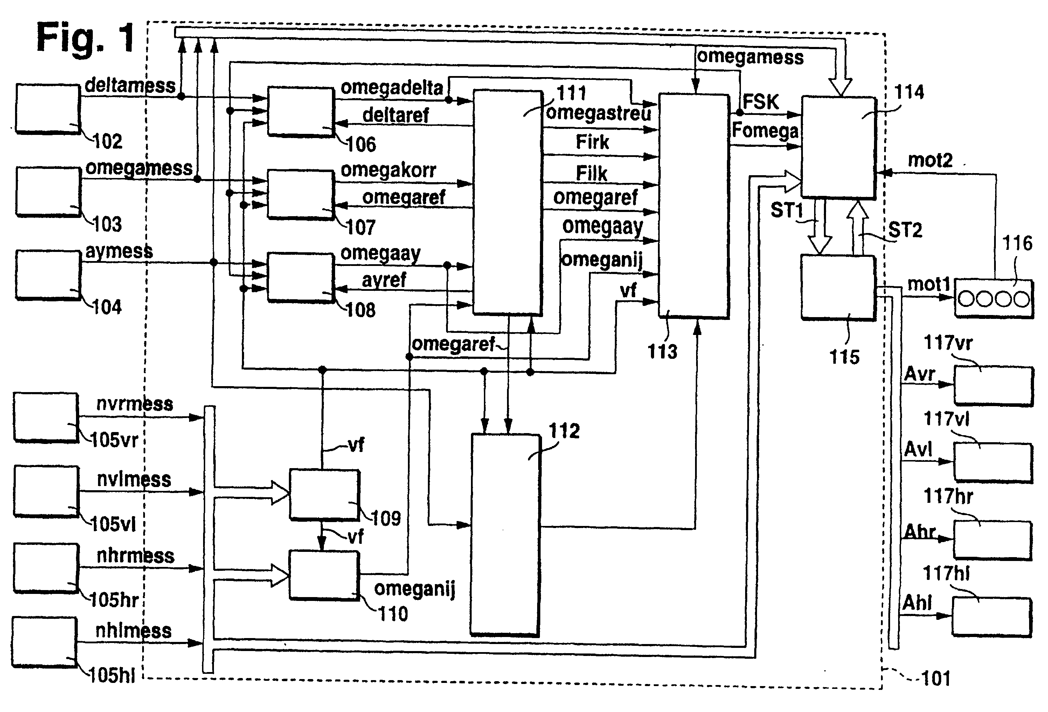

Die Erfindung soll nun anhand der Figuren 1 bis 4 beschrieben werden. Dabei ist zu beachten, daß die spezielle Form des gewählten Ausführungsbeispieles - der Einsatz der erfindungsgemäßen Vorrichtung bzw. des erfindungsgemäßen Verfahrens in einem System zur Regelung der Fahrdynamik eines Fahrzeuges - keine Einschränkung der erfindungsgemäßen Idee darstellen soll.

In Figur 1 stellt der Block 101 ein Steuergerät dar, welches in der erfindungsgemäßen Vorrichtung zur Durchführung des erfindungsgemäßen Verfahrens zum Einsatz kommt.

Mit 102 ist ein Lenkwinkelsensor bezeichnet, mit dem eine den am Fahrzeug eingestellten Lenkwinkel beschreibende Größe deltamess erfaßt werden kann. Das mit Hilfe des Lenkwinkelsensor 102 erzeugte Signal deltamess wird sowohl einem Block 106 als auch einem Block 114 zugeführt. Mit Hilfe eines Drehraten- bzw. Gierratensensors 103 wird eine die Gierbewegung des Fahrzeuges um seine Hochachse beschreibende Größe erfaßt. Das mit Hilfe des Drehraten- bzw. Gierratensensors 103 erfaßte Signal omegamess wird sowohl einem Block 107 als auch einem Block 114 zugeführt. Mit einem Querbeschleunigungssensor 104 wird eine die am Fahrzeug angreifende Querbeschleunigung beschreibende Größe erfaßt. Das mit Hilfe des Querbeschleunigungssensors 104 erzeugte Signal aymess wird den Blöcken 108, 114 sowie 112 zugeführt. Die Blöcke 105vr, 105vl, 105hr bzw. 105hl stellen den Rädern des Fahrzeuges zugeordnete Raddrehzahlsensoren dar. Nachfolgend wird für die Raddrehzahlsensoren die vereinfachende Schreibweise 105ij eingeführt. Dabei gibt der Index i an, ob sich das Rad an der Hinterachse (h) oder an der Vorderachse (v) befindet. Der Index j zeigt die Zuordnung zur rechten (r) bzw. zur linken (l) Fahrzeugseite an. Diese Kennzeichnung durch die beiden Indizes i bzw. j ist für sämtliche Größen bzw. Komponenten, bei denen sie Verwendung findet, entsprechend. Die mit Hilfe der Raddrehzahlsensoren 105ij erzeugten Signale nijmess werden den Blöcken 109, 110 bzw. 114 zugeführt.

Ausgehend von den mit den Raddrehzahlsensoren 105ij erzeugten Signalen nijmess wird in einem Block 109 eine die Fahrzeuggeschwindigkeit beschreibende Größe vf erzeugt. Diese die Fahrzeuggeschwindigkeit beschreibende Größe vf wird ausgehend vom Block 109 den Blöcken 106, 108, 110, 111, 112 sowie einem Block 113 zugeführt. Optional kann die Größe vf auch dem Block 107 zugeführt werden.

In den Blöcken 106, 107, 108 sowie 110 werden für die Sensoren 102, 103, 104 sowie 105ij gleich definierte Vergleichsgrößen ermittelt. Im vorliegenden Ausführungsbeispiel sei angenommen, daß die für die Sensoren gleich definierten Vergleichsgrößen als physikalische Größe eine Giergeschwindigkeit repräsentieren.

In einem Block 106 wird ausgehend von dem ihm zugeführten Signal deltamess, sowie der die Fahrzeuggeschwindigkeit beschreibenden Größe vf, sowie den ihm zugeführten Größen FSK bzw. deltaref eine gleich definierte Vergleichsgröße omegadelta ermittelt. Die gleich definierte Vergleichsgröße omegadelta wird ausgehend vom Block 106 den Blöcken 111 bzw. 113 zugeführt. Die Ermittlung der gleich definierten Vergleichsgröße omegadelta läuft im Block 106 beispielsweise folgendermaßen ab:

Zunächst wird ausgehend von dem Signal deltamess, von der die Fahrzeuggeschwindigkeit beschreibenden Größe vf sowie einem Signal deltaref, welches einen Referenzwert für den mit Hilfe des Lenkwinkelsensors 102 erfaßten Lenkwinkel beschreibt, ein Offsetwert für das Signal deltamess ermittelt. Bei der Ermittlung des Offsetwertes wird die Größe FSK, die anzeigt, ob sich das Fahrzeug auf einer quer zur Fahrtrichtung des Fahrzeuges geneigten Fahrbahn befindet, berücksichtigt. Beispielsweise kann für den Fall, daß sich das Fahrzeug auf einer quer zur Fahrtrichtung des Fahrzeuges geneigten Fahrbahn befindet, die Bildung eines aktuellen Offsetwertes gesperrt werden. In diesem Fall wird der zuletzt vorgelegene Offsetwert eingefroren und solange verwendet, wie sich das Fahrzeug auf einer quer zur Fahrtrichtung des Fahrzeuges geneigten Fahrbahn befindet. Ausgehend von dem ermittelten Offsetwert wird das Signal deltamess korrigiert. Aus dem korrigierten Signal wird mit Hilfe eines mathematischen Modells unter Berücksichtigung der die Fahrzeuggeschwindigkeit beschreibenden Größe vf die gleich definierte Vergleichsgröße omegadelta ermittelt.

Im Block 108 läuft die Ermittlung der gleich definierten Vergleichsgröße omegaay ausgehend von den ihm zugeführten Signalen aymess, vf, FSK sowie ayref entsprechend der Ermittlung der gleich definierten Vergleichsgröße omegadelta im Block 106 ab. Die gleich definierte Vergleichsgröße omegaay wird sowohl einem Block 111 als auch einem Block 113 zugeführt.

Da wie bereits erwähnt, die für die Sensoren gleich definierten Vergleichsgrößen als physikalische Größe eine Giergeschwindigkeit repräsentieren, entspricht die im Block 107 ermittelte gleich definierte Vergleichsgröße omegakorr dem offsetkorrigierten Signal omegamess, da in diesem Fall eine Umrechnung des offsetkorrigierten Sensorsignals mit Hilfe eines mathematischen Modells in eine Giergeschwindigkeit nicht erforderlich ist. Wie bereits im Zusammenhang mit den Blöcken 106 bzw. 108 beschrieben, wird im Block 107, ausgehend von dem Signal omegamess sowie den Größen FSK bzw. omegaref ein Offsetwert für das Signal omegamess ermittelt. Mit Hilfe dieses Offsetwertes wird die gleich definierte Vergleichsgröße omegakorr aus dem Signal omegamess berechnet. Die Größe omegakorr wird einem Block 111 zugeführt.

Für den Fall, daß die für die Sensoren gleich definierten Vergleichsgrößen als physikalische Größe eine andere Größe als die Giergeschwindigkeit repräsentieren, ist auch im Block 107 eine Umrechnung des offsetkorrigierten Signals mit Hilfe eines mathematischen Modells erforderlich. Aus diesem Grund ist die Zuführung der die Fahrzeuggeschwindigkeit beschreibenden Größe vf an dem Block 107 als optional angedeutet.

In einem Block 110 wird ausgehend von den mit Hilfe der Raddrehzahlsensoren 105ij erzeugte Signale nijmess sowie der die Fahrzeuggeschwindigkeit repräsentierenden Größe vf für die Raddrehzahlsensoren 105ij eine gleich definierte Vergleichsgröße omeganij ermittelt. Die gleich definierte Vergleichsgröße omeganij wird ausgehend vom Block 110 den Blöcken 111 bzw. 113 zugeführt.

In einem Block 111 werden ausgehend von dem ihm zugeführten gleich definierten Vergleichsgrößen omegadelta, omegakorr, omegaay sowie omeganij sowie der die Fahrzeuggeschwindigkeit repräsentierenden Größe verschiedene Größen ermittelt. Zum einen wird im Block 111 ausgehend von den gleich definierten Vergleichsgrößen omegadelta, omegakorr, omegaay bzw. omeganij eine Referenzgröße omegaref ermittelt. Dies kann beispielsweise durch Bildung eines geeigneten Mittelwertes erfolgen. Die Referenzgröße omegaref wird ausgehend vom Block 111 den Blöcken 107, 112 sowie 113 zugeführt. Desweiteren wird im Block 111 ausgehend von den gleich definierten Vergleichsgrößen omegadelta, omegakorr, omegaay sowie omeganij eine Größe omegastreu ermittelt, die die Abweichung der gleich definierten Vergleichsgrößen untereinander beschreibt. Die Größe omegastreu wird ausgehend vom Block 111 einem Block 113 zugeführt. Die Größe omegastreu kann beispielsweise nach folgendem Ansatz ermittelt werden:

$$\text{omegastreu} = \frac{1}{\text{GEW1} + \text{GEW2} + \text{GEW3} + \text{GEW4}} \tag{1}$$

mit

$$\text{GEW1} = \frac{1}{|\text{omegakorr - omegadelta}| \cdot |\text{omegakorr - omeganij}| \cdot |\text{omegakorr - omegaay}|} \tag{2},$$

$$\text{GEW2} = \frac{1}{|\text{omegakorr - omegadelta}| \cdot |\text{omegadelta - omeganij}| \cdot |\text{omegadelta - omegaay}|} \tag{3},$$

$$\text{GEW3} = \frac{1}{|\text{omegakorr - omeganij}| \cdot |\text{omegadelta - omeganij}| \cdot |\text{omeganij - omegaay}|} \tag{4},$$

$$\text{GEW4} = \frac{1}{|\text{omegakorr - omegaay}| \cdot |\text{omegadelta - omegaay}| \cdot |\text{omeganij - omegaay}|} \tag{5}.$$

Durch Beziehung (1) ist die Bildung der Größe omegastreu definiert. Die Bildung der in Gleichung (1) enthaltenen Größen GEW1, GEW2, GEW3 sowie GEW4 ist durch die Gleichungen (2), (3), (4) sowie (5) beschrieben. Wie man diesen Beziehungen entnimmt, stellen die Größen GEW1, GEW2, GEW3 sowie GEW4 für jede gleich definierte Vergleichsgröße eine Größe dar, die die Abweichung dieser gleich definierten Vergleichsgröße zu den anderen gleich definierten Vergleichsgrößen beschreibt.

Dabei ist festzuhalten, daß die Größe GEW1 für die gleich definierte Größe omegakorr, die Größe GEW2 für die gleich definierte Größe omegadelta, die Größe GEW3 für die gleich definierte Größe omeganij und die Größe GEW4 für die gleich definierte Größe omegaay gebildet wird.

Wahlweise zu obigem Ansatz kann die Größe omegastreu auch nur ausgehend von den gleich definierten Vergleichsgrößen omegadelta, omeganij sowie omegaay ermittelt werden. Dies hat den Vorteil, daß die Größe omegastreu neben der Feststellung, ob sich das Fahrzeug auf einer quer zur Fahrtrichtung des Fahrzeuges geneigten Fahrbahn befindet, außerdem noch zur Überwachung des Gierratensensors herangezogen werden kann. In diesem Fall wird die Größe omegastreu nach folgendem Ansatz gebildet:

$$\text{omegastreu} = \frac{1}{\text{GEW2'} + \text{GEW3'} + \text{GEW4'}} \tag{6}$$

mit

$$\text{GEW2'} = \frac{1}{|\text{omegadelta - omeganij}| \cdot |\text{omegadelta - omegaay}|} \tag{7},$$

$$\text{GEW3'} = \frac{1}{|\text{omegadelta - omeganij}| \cdot |\text{omeganij - omegaay}|} \tag{8},$$

$$\text{GEW4'} = \frac{1}{|\text{omegadelta - omegaay}| \cdot |\text{omeganij - omegaay}|} \tag{9}.$$

Wie den Beziehungen (6), (7), (8) sowie (9) zu entnehmen ist, wird zur Bildung der Größe omegastreu, die die Abweichung der gleich definierten Vergleichsgrößen untereinander beschreibt, lediglich ein Teil der gleich definierten Vergleichsgrößen herangezogen. Für diesen Teil der gleich definierten Vergleichsgrößen stellen die Größen GEW2', GEW3' sowie GEW4' Größen dar, die für jede dieser gleich definierten Vergleichsgrößen dieses Teils der gleich definierten Vergleichsgrößen die Abweichung dieser gleich definierten Vergleichsgröße zu den anderen gleich definierten Vergleichsgrößen dieses Teils dieser gleich definierten Vergleichsgrößen beschreibt. Von besonderem Vorteil ist es, wenn das Signal omegastreu vor der Weiterverarbeitung im Block 113 tiefpaßgefiltert wird. Die Zuordnung der gleich definierten Vergleichsgrößen zu den einzelnen Größen GEW2, GEW3 bzw. GEW4 entspricht der des vorigen Ansatzes.

Ferner werden im Block 111 die Größen Firk sowie Filk ermittelt. Die Größen Firk bzw. Filk geben an, ob die gleich definierten Vergleichsgrößen in Abhängigkeit ihres Wertes jeweils entsprechend einer vorgegebenen Anordnung angeordnet sind, wobei die vorgegebene Anordnung einer Kurvenfahrt auf einer quer zur Fahrtrichtung des Fahrzeuges geneigten Fahrbahn beschreibt. Die Größe Firk gibt an, ob sich das Fahrzeug in einer nach innen geneigten Rechtskurve befindet, die Größe Filk gibt an, ob sich das Fahrzeug in einer nach innen geneigten Linkskurve befindet. Die beiden Größen Firk sowie Filk werden ausgehend vom Block 111 einem Block 113 zugeführt.

Neben den bereits beschriebenen Größen werden im Block 111 die bereits weiter oben erwähnten Größen deltaref sowie ayref, die für den jeweiligen Sensor eine Sensorreferenzgröße darstellen, erzeugt. Ausgehend von der Referenzgröße omegaref werden diese Größen jeweils unter Berücksichtigung der die Fahrzeuggeschwindigkeit repräsentierenden Größe vf und unter Verwendung eines sprechenden mathematischen Modells ermittelt. Ausgehend vom Block 111 wird die Größe deltaref dem Block 106 zugeführt, die Größe ayref wird dem Block 108 zugeführt. Für den Sensor 103 wird hierfür der Referenzwert omegaref verwendet, aus diesem Grund wird ausgehend vom Block 111 dem Block 107 der Referenzwert omegaref zugeführt.

In einem Block 112 wird ausgehend von dem Signal aymess, der die Fahrzeuggeschwindigkeit beschreibenden Größe vf sowie der Referenzgröße omegaref eine Größe taykomp ermittelt, die die zeitliche Änderung einer Differenz beschreibt, die aus der Größe bzw. dem Signal aymess, die die am Fahrzeug angreifende Querbeschleunigung beschreibt und einer Vergleichsgröße für die Querbeschleunigung gebildet wird. Die Größe taykomp wird ausgehend vom Block 112 einem Block 113 zugeführt.

Im Block 113 laufen zwei Dinge ab. Zum einen wird im Block 113 ausgehend von den Signalen omegadelta, omeganij, omegastreu, Firk, Filk sowie der die Fahrzeuggeschwindigkeit beschreibenden Größe vf festgestellt, ob sich das Fahrzeug auf einer quer zur Fahrtrichtung des Fahrzeuges geneigten Fahrbahn befindet. Das Ergebnis dieser Feststellung wird mit Hilfe der Größe FSK, ausgehend vom Block 113 einem Block 114 sowie den Blöcken 106, 107 sowie 108 zugeführt. Zum anderen findet im Block 113 wenigstens für den Drehraten- bzw. Gierratensensor 103 eine Überwachung statt. In die Überwachung des Drehraten- bzw. Gierratensensors 103 gehen die Größen omegadelta, omegaay, omeganij, omegaref, das Signal omegamess sowie eine Größe tsteilw, die im Block 113, im Zusammenhang mit der Feststellung, ob sich das Fahrzeug auf einer quer zur Fahrtrichtung des Fahrzeuges geneigten Fahrbahn befindet, erzeugt wird, ein. Ausgehend von diesen Größen werden Plausibilitätsabfragen durchgeführt, anhand derer der Drehraten- bzw. Gierratensensor 103 überwacht wird. Das Ergebnis der Überwachung wird ausgehend vom Block 113 mit Hilfe der Größe Fomega einem Block 114 zugeführt.

Im Block 113 können neben dem Drehraten- bzw. Gierratensensor 103 auch der Lenkwinkelsensor 102 bzw. der Querbeschleunigungssensor 104 überwacht werden. Auch für diese beiden Sensoren können ausgehend vom Block 113 Signale erzeugt werden, mit denen dem Block 114 mitgeteilt wird, ob der jeweilige Sensor fehlerhaft ist oder nicht.

Der mit 114 bezeichnete Block stellt den Regler des Steuergerätes 101 dar. Dem Block 114 werden die Meßsignale deltamess, omegamess, aymess sowie nijmess zugeführt. Ferner erhält der Block 114, ausgehend vom Motor 116 ein Signal mot2, welches beispielsweise die Drehzahl des Motors beschreibt. Ferner erhält der Block 114, ausgehend von einem Block 115, welcher die Ansteuerlogik für die Aktuatoren 117ij und den Motor darstellt, Signale ST2 zugeführt. Bei diesen Signalen kann es sich beispielsweise um die Ansteuerzeiten Aij der Aktuatoren 117ij, welche insbesondere als Bremsen ausgebildet sind, handeln. Ausgehend von den Meßsignalen, den Signalen ST2 sowie unter Berücksichtigung der Größen FSK sowie Fomega, ermittelt der Regler 114 entsprechend der in ihm implementierten Regelung, Signale ST1, die der Ansteuerlogik 115 zugeführt werden. Wird dem Regler 114 durch das Signal FSK mitgeteilt, daß sich das Fahrzeug auf einer quer zur Fahrtrichtung des Fahrzeuges geneigten Fahrbahn befindet, so kann die Bildung der Signale ST1 modifiziert werden. Entsprechendes gilt, wenn dem Regler 114 mit Hilfe des Signals Fomega mitgeteilt wird, daß der Drehraten- bzw. Gierratensensor 103 fehlerhaft ist.

Im Block 115 werden ausgehend von den ihm zugeführten Signalen ST1 ein Ansteuersignal mot1 für den Motor 116 sowie Ansteuersignale Aij für die Aktuatoren 117ij ermittelt. Durch die entsprechende Ansteuerung des Motors 116 sowie der Aktuatoren 117ij, welche insbesondere als Bremsen ausgebildet sind, wird die Regelung einer die Fahrzeugbewegung repräsentierenden Bewegungsgröße realisiert. Mit den im Block 115 erzeugten Signalen ST2 wird dem Regler 114 beispielsweise der Zustand der Aktuatoren 117ij mitgeteilt.

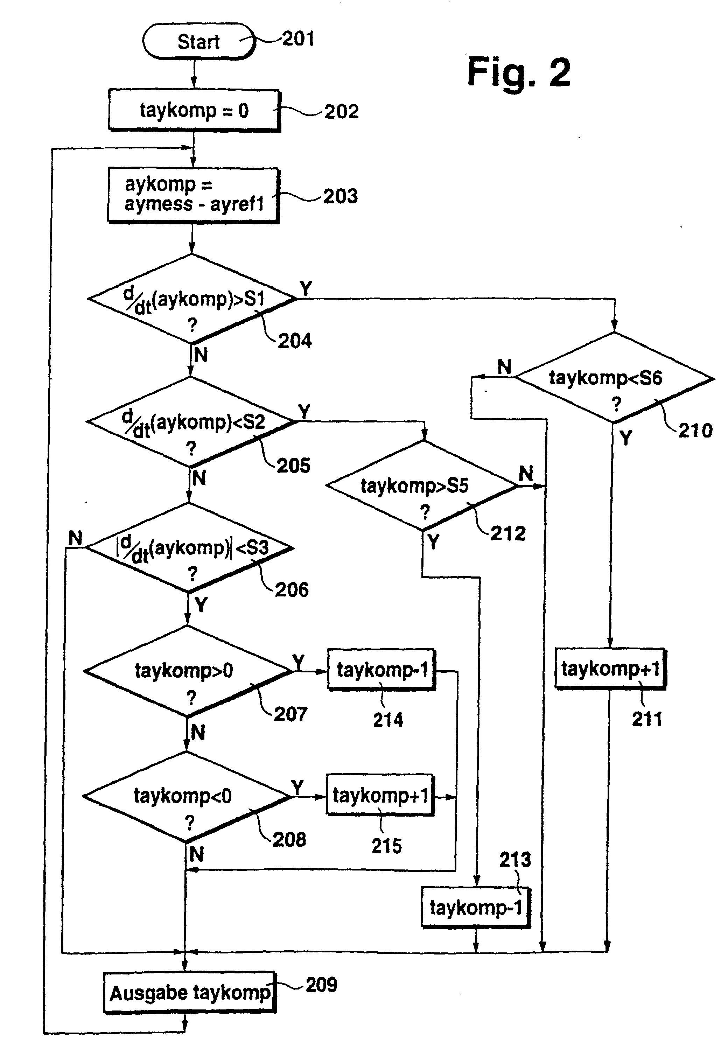

Mit Hilfe des in Figur 2 dargestellten Flußdiagrammes wird die in Block 112 stattfindende Ermittlung der Größe taykomp, die die zeitliche Änderung der Differenz beschreibt, die aus der Größe bzw. dem Signal aymess, die die am Fahrzeug angreifende Querbeschleunigung beschreibt und einer Vergleichsgröße für die Querbeschleunigung gebildet wird, beschrieben.

Die Ermittlung der Größe taykomp beginnt mit einem Schritt 201. Anschließend an den Schritt 201 folgt ein Schritt 202, in dem der Größe taykomp der Wert 0 zugewiesen wird. Diese Wertzuweisung stellt eine Initialisierung der Größe taykomp dar, wie sie beispielsweise beim Drehen des Zündschlüssels bei Fahrtbeginn durchgeführt wird. Im Anschluß an den Schritt 202 wird ein Schritt 203 ausgeführt. Im Schritt 203 wird eine Größe aykomp durch Differenzbildung aus der Größe aymess und einer Größe ayref1 gebildet. Die Größe ayref1 stellt eine Vergleichsgröße für die Querbeschleunigung dar. Die Größe ayref1 wird ausgehend von der die Fahrzeuggeschwindigkeit beschreibenden Größe vf und der Referenzgröße omegaref gebildet. Folglich stellt die Größe aykomp die Abweichung der gemessenen Querbeschleunigung von einer zugehörigen Vergleichsgröße dar. Im Anschluß an den Schritt 203 wird ein Schritt 204 ausgeführt.

Im Schritt 204 wird ermittelt, ob die Änderungsrate d/dt(aykomp) der Größe aykomp größer als ein erster Schwellenwert S1 ist. Dabei ist der Schwellwert S1 ein kleiner positiver Wert. Wenn die Änderungsrate der Größe aykomp kleiner als der erste Schwellenwert S1 ist, wird anschließend an den Schritt 204 ein Schritt 205 ausgeführt. Ist dagegen die Änderungsrate der Größe aykomp größer als der erste Schwellenwert, d.h. aykomp ist mit einem Mindestwert monoton steigend, so wird anschließend an den Schritt 204 ein Schritt 210 ausgeführt.

Im Schritt 210 wird überprüft, ob der Wert der Größe taykomp kleiner als eine Vergleichsgröße S6 ist. Wird im Schritt 210 festgestellt, daß der Wert der Größe taykomp kleiner als die Vergleichsgröße S6 ist, so wird im Anschluß an den Schritt 210 ein Schritt 211 ausgeführt. Wird dagegen im Schritt 210 festgestellt, daß der Wert der Größe taykomp größer als die Vergleichsgröße S6 ist, so wird im Anschluß an den Schritt 210 ein Schritt 209 ausgeführt. Die Vergleichsgröße S6 stellt einen großen positiven Wert dar, beispielsweise kann der Vergleichswert S6 den Wert 25 annehmen.

Im Schritt 211 wird die Größe taykomp, welche insbesondere als Zähler ausgebildet ist, inkrementiert, d.h. um 1 erhöht. Anschließend an den Schritt 211 wird ein Schritt 209 ausgeführt.

Im Schritt 205 wird die Änderungsrate d/dt(aykomp) der Größe aykomp mit einem zweiten Schwellenwert S2 verglichen. Der Schwellenwert S2 ist ein betragsmäßig kleiner, negativer Wert. Ist die Änderungsrate der Größe aykomp kleiner als der zweite Schwellenwert S2, d.h. die Größe aykomp ist mit einem Mindestwert monoton fallend, so wird im Anschluß an den Schritt 205 ein Schritt 212 ausgeführt. Ist dagegen die Änderungsrate der Größe aykomp größer als der zweite Schwellenwert S2, so wird im Anschluß an den Schritt 205 ein Schritt 206 ausgeführt.

Im Schritt 212 wird ermittelt, ob der Wert der Größe taykomp größer als ein Vergleichsgröße S5 ist. Wird im Schritt 212 festgestellt, daß der Wert der Größe taykomp größer als die Vergleichsgröße S5 ist, so wird im Anschluß an den Schritt 212 ein Schritt 213 ausgeführt. Wird dagegen im Schritt 212 festgestellt, daß der Wert der Größe taykomp kleiner als die Vergleichsgröße S5 ist, so wird im Anschluß an den Schritt 212 der Schritt 209 ausgeführt. Bei dem Vergleichswert S5 handelt es sich um eine betragsmäßig große negative Zahl, beispielsweise kann der Vergleichswert S5 den Wert -25 annehmen.

Im Schritt 213 wird die Größe taykomp dekrementiert, d.h. um 1 erniedrigt. Im Anschluß an den Schritt 213 wird der Schritt 209 ausgeführt.

Im Schritt 206 wird der Betrag der Änderungsrate d/dt (aykomp) mit einem dritten Schwellenwert S3 verglichen. Bei dem dritten Schwellenwert S3 handelt es sich um eine sehr kleine Zahl, insbesondere um die Zahl 0. Wird im Schritt 206 festgestellt, daß der Betrag der Änderungsrate der Größe aykomp größer ist als der dritte Schwellenwert S3, so wird im Anschluß an den Schritt 206 der Schritt 209 ausgeführt. Wird dagegen im Schritt 206 festgestellt, daß der Betrag der Änderungsrate der Größe aykomp kleiner ist als der dritte Schwellenwert S3, so wird im Anschluß an den Schritt 206 ein Schritt 207 ausgeführt.

Im Schritt 207 wird ermittelt, ob die Größe taykomp größer als 0 ist. Wird im Schritt 207 festgestellt, daß die Größe taykomp größer als 0 ist, so wird im Anschluß an den Schritt 207 ein Schritt 214 ausgeführt, in welchem die Größe taykomp dekrementiert wird. Im Anschluß an den Schritt 214 wird der Schritt 209 ausgeführt. Wird dagegen im Schritt 207 festgestellt, daß die Größe taykomp nicht größer als 0 ist, so wird im Anschluß 207 ein Schritt 208 durchgeführt.

Im Schritt 208 wird überprüft, ob die Größe taykomp kleiner als 0 ist. Wird im Schritt 208 festgestellt, daß die Größe taykomp kleiner als 0 ist, so wird im Anschluß an den Schritt 208 ein Schritt 215 ausgeführt, in welchem die Größe taykomp inkrementiert wird. Im Anschluß an den Schritt 215 wird der Schritt 209 ausgeführt. Wird dagegen im Schritt 208 festgestellt, daß die Größe taykomp nicht kleiner als 0 ist, so wird im Anschluß an den Schritt 208 der Schritt 209 ausgeführt.

Im Schritt 209 wird der Wert der Größe taykomp ausgegeben, d.h. er wird beispielsweise den anderen, eventuell vorhandenen Reglern zur Verfügung gestellt. Anschließend an den Schritt 209 wird erneut der Schritt 203 ausgeführt.

An dieser Stelle sei bemerkt, daß mit der Abfrage im Schritt 206 festgestellt wird, ob sich die Größe aykomp im eingeschwungenen Zustand befindet. D.h., es wird festgestellt, ob die aus aymess und der Vergleichsgröße ayref1 gebildete Differenz zeitlich nahezu unverändert bleibt. Durch die Schritte 207, 208, 214 bzw. 215 wird die Größe taykomp für den Fall, daß sich die Größe aykomp im eingeschwungenen Zustand befindet, an einen vorgegebenen Wert herangeführt. Bei diesem vorgegebenen Wert kann es sich insbesondere um den Wert 0 handeln.

Abschließend sei festgestellt, daß es von Vorteil sein kann, wenn sämtliche der in Figur 2 enthaltenen Schwellenwerte bzw. Vergleichsgrößen in Abhängigkeit der Größe, die die Fahrzeuggeschwindigkeit vf beschreibt, variiert werden.

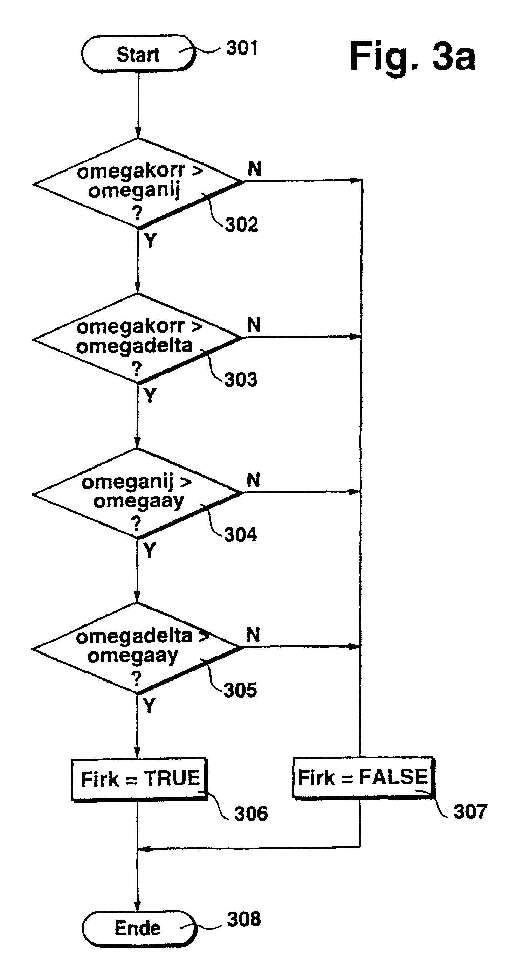

In Figur 3a ist mit Hilfe eines Flußdiagrammes eine aus einzelnen Abfragen aufgebaute Plausibilitätsabfrage dargestellt, mit der festgestellt wird, ob die gleich definierten Vergleichsgrößen in Abhängigkeit ihres Wertes entsprechend einer ersten vorgegebenen Anordnung angeordnet sind. Die Anordnung beschreibt eine Kurvenfahrt auf einer quer zur Fahrtrichtung des Fahrzeuges geneigten Fahrbahn, insbesondere eine Kurvenfahrt auf einer nach innen geneigten Rechtskurve.

Die Plausibilitätsabfrage beginnt mit einem Schritt 301. Im Anschluß an den Schritt 301 wird ein Schritt 302 ausgeführt, in welchem überprüft wird, ob die gleich definierte Vergleichsgröße omegakorr größer als die gleich definierte Vergleichsgröße omeganij ist. Wird im Schritt 302 festgestellt, daß die Größe omegakorr größer als die Größe omeganij ist, so wird anschließend an den Schritt 302 ein Schritt 303 ausgeführt. Wird dagegen im Schritt 302 festgestellt, daß die Größe omegakorr kleiner als die Größe omeganij ist, so wird im Anschluß an den Schritt 302 ein Schritt 307 ausgeführt. Im Schritt 307 wird der Größe Firk der Wert FALSE zugewiesen. Im Anschluß an den Schritt 307 wird ein Schritt 308 ausgeführt, mit welchem die Plausibilitätsabfrage beendet wird.

Im Schritt 303 wird überprüft, ob die gleich definierte Vergleichsgröße omegakorr größer ist als die gleich definierte Vergleichsgröße omegadelta. Wird im Schritt 303 festgestellt, daß die Größe omegakorr größer als die Größe omegadelta ist, so wird im Anschluß an den Schritt 303 ein Schritt 304 ausgeführt. Wird dagegen im Schritt 303 festgestellt, daß die Größe omegakorr kleiner als die Größe omegadelta ist, so wird im Anschluß an den Schritt 303 der Schritt 307 ausgeführt.

Im Schritt 304 wird überprüft, ob die gleich definierte Vergleichsgröße omeganij größer ist als die gleich definierte Vergleichsgröße omegaay. Wird im Schritt 304 festgestellt, daß die Größe omeganij größer ist als die Größe omegaay, so wird im Anschluß an den Schritt 304 ein Schritt 305 ausgeführt. Wird dagegen im Schritt 304 festgestellt, daß die Größe omeganij kleiner ist als die Größe omegaay, so wird im Anschluß an den Schritt 304 der Schritt 307 ausgeführt.

Im Schritt 305 wird überprüft, ob die gleich definierte Vergleichsgröße omegadelta größer ist als die gleich definierte Vergleichsgröße omegaay. Wird im Schritt 305 festgestellt, daß die Größe omegadelta größer ist als die Größe omegaay, so wird im Anschluß an den Schritt 305 ein Schritt 306 ausgeführt. In dem Schritt 306 wird der Größe Firk der Wert TRUE zugewiesen. Im Anschluß an den Schritt 306 wird der Schritt 308 ausgeführt. Wird dagegen im Schritt 305 festgestellt, daß die Größe omegadelta kleiner ist als die Größe omegaay, so wird im Anschluß an den Schritt 305 der Schritt 307 ausgeführt.

Wird der Größe Firk der Wert TRUE zugewiesen, so sind die gleich definierten Vergleichsgrößen in Abhängigkeit ihres Wertes entsprechend der vorgegebenen Anordnung angeordnet, d.h. das Fahrzeug befindet sich auf einer nach innen geneigten Rechtskurve.

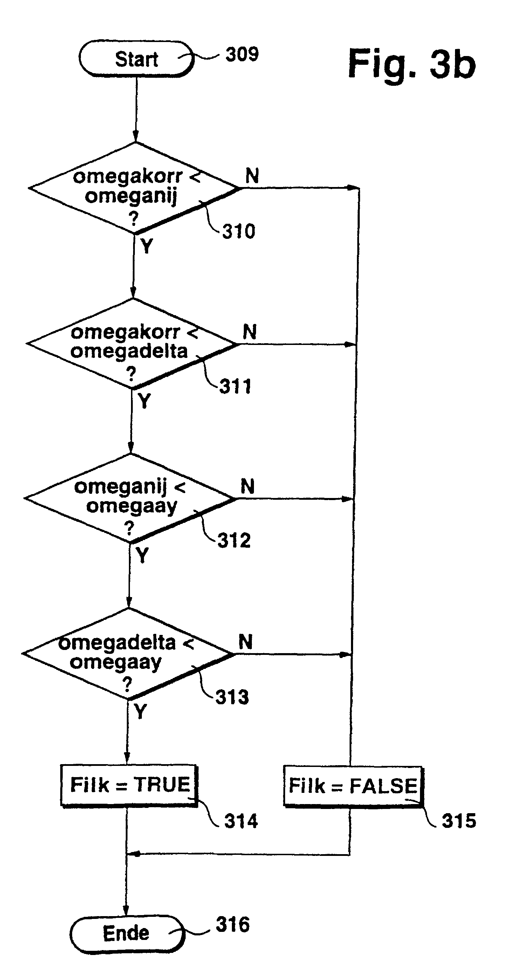

In Figur 3b ist mit Hilfe eines Flußdiagrammes eine Plausibilitätsabfrage dargestellt, mit der festgestellt wird, ob die gleich definierten Vergleichsgrößen in Abhängigkeit ihres Wertes entsprechend einer zweiten vorgegebenen Anordnung angeordnet sind. Die vorgegebene Anordnung beschreibt eine Kurvenfahrt auf einer quer zur Fahrtrichtung des Fahrzeuges geneigten Fahrbahn, insbesondere eine Kurvenfahrt auf einer nach innen geneigten Linkskurve.

Die Plausibilitätsabfrage beginnt mit einem Schritt 309, an den sich ein Schritt 310 anschließt. Im Schritt 310 wird überprüft, ob die gleich definierte Vergleichsgröße omegakorr kleiner ist als die gleich definierte Vergleichsgröße omeganij. Wird im Schritt 310 festgestellt, daß die Größe omegakorr kleiner ist als die Größe omeganij, so wird im Anschluß an den Schritt 310 ein Schritt 311 ausgeführt. Wird dagegen im Schritt 310 festgestellt, daß die Größe omegakorr größer ist als die Größe omeganij, so wird im Anschluß an den Schritt 310 ein Schritt 315 ausgeführt. Im Schritt 315 wird der Größe Filk der Wert FALSE zugeführt. Im Anschluß an den Schritt 315 wird ein Schritt 316 ausgeführt, mit dem die Plausibilitätsabfrage beendet wird.

Im Schritt 311 wird überprüft, ob die gleich definierte Vergleichsgröße omegakorr kleiner ist als die gleich definierte Vergleichsgröße omegadelta. Wird im Schritt 311 festgestellt, daß die Größe omegakorr kleiner ist als die Größe omegadelta, so wird im Anschluß an den Schritt 311 ein Schritt 312 ausgeführt. Wird dagegen im Schritt 311 festgestellt, daß die Größe omegakorr größer ist als die Größe omegadelta, so wird im Anschluß an den Schritt 311 der Schritt 315 ausgeführt.

Im Schritt 312 wird überprüft, ob die gleich definierte Vergleichsgröße omeganij kleiner ist als die gleich definierte Vergleichsgröße omegaay. Wird im Schritt 312 festgestellt, daß die Größe omeganij kleiner ist als die Größe omegaay, so wird im Anschluß an den Schritt 312 ein Schritt 313 ausgeführt. Wird dagegen im Schritt 312 festgestellt, daß die Größe omeganij größer ist als die Größe omegaay, so wird im Anschluß an den Schritt 312 der Schritt 315 ausgeführt.

Im Schritt 313 wird überprüft, ob die gleich definierte Vergleichsgröße omegadelta kleiner ist als die gleich definierte Vergleichsgröße omegaay. Wird im Schritt 313 festgestellt, daß die Größe omegadelta kleiner ist als die Größe omegaay, so wird im Anschluß an den Schritt 313 ein Schritt 314 ausgeführt. Im Schritt 314 wird der Größe Filk ein Wert TRUE zugewiesen. Im Anschluß an den Schritt 314 wird der Schritt 316 ausgeführt. Wird dagegen im Schritt 313 festgestellt, daß die Größe omegadelta größer ist als die Größe omegaay, so wird im Anschluß an den Schritt 313 der Schritt 315 ausgeführt.

Der Größe Filk wird dann der Wert TRUE zugewiesen, wenn die gleich definierten Vergleichsgrößen entsprechend der vorgegebenen Anordnung angeordnet sind, d.h. das Fahrzeug befindet sich auf einer nach innen geneigten Linkskurve.

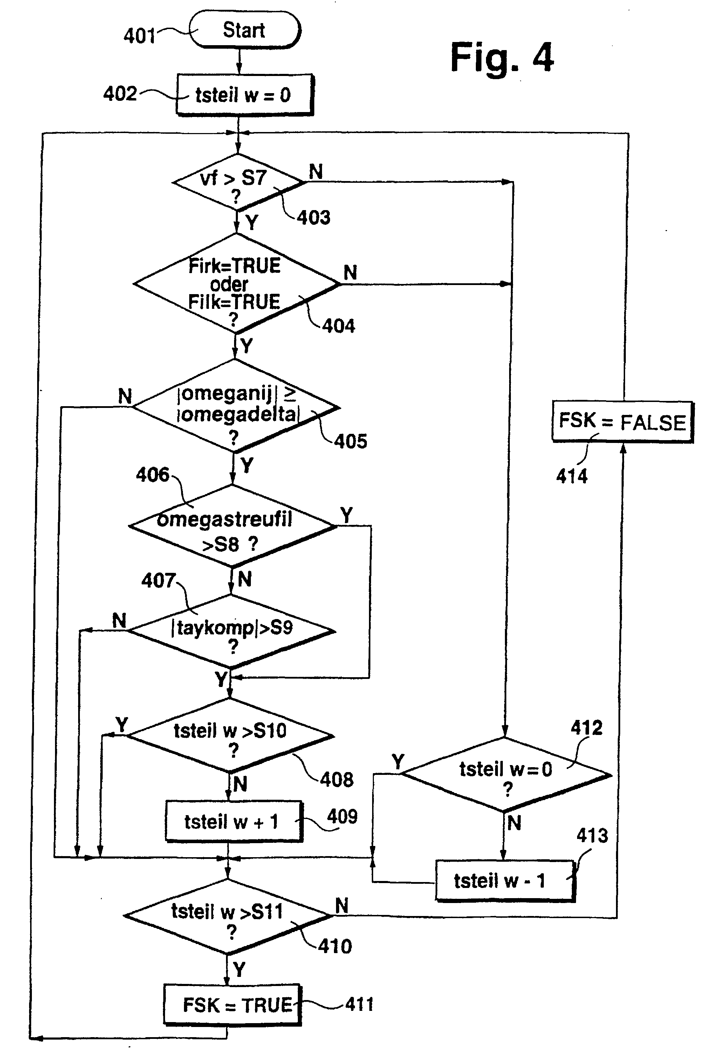

In Figur 4 sind mit Hilfe eines Flußdiagrammes die Plausibilitätsabfragen dargestellt, die zur Feststellung, ob sich das Fahrzeug auf einer quer zur Fahrtrichtung des Fahrzeuges geneigten Fahrbahn befindet, durchgeführt werden.

Die Feststellung, ob sich das Fahrzeug auf eine quer zur Fahrtrichtung des Fahrzeuges geneigten Fahrbahn befindet, startet mit Schritt 401. Im Anschluß an den Schritt 401 wird ein Schritt 402 ausgeführt, in welchem der Größe tsteilw, welche insbesondere als Zähler ausgebildet ist, der Wert 0 zugewiesen wird. Anschließend an den Schritt 402 wird ein Schritt 403 ausgeführt.

Im Schritt 403 wird die die Fahrzeuggeschwindigkeit beschreibende Größe vf mit einem siebten Schwellenwert S7 verglichen. Wird im Schritt 403 festgestellt, daß die die Fahrzeuggeschwindigkeit beschreibende Größe vf größer als der Schwellenwert S7 ist, so wird anschließend an den Schritt 403 ein Schritt 404 ausgeführt. Wird dagegen im Schritt 403 festgestellt, daß die die Fahrzeuggeschwindigkeit beschreibende Größe vf kleiner als der Schwellenwert S7, welcher ein positiver Wert ist, ist, so wird anschließend an den Schritt 403 ein Schritt 412 ausgeführt.

Im Schritt 412 wird überprüft, ob die Größe tsteilw gleich dem Wert 0 ist. Wird im Schritt 412 festgestellt, daß die Größe tsteilw gleich dem Wert 0 ist, so wird anschließend an den Schritt 412 ein Schritt 410 ausgeführt. Wird dagegen im Schritt 412 festgestellt, daß die Größe tsteilw ungleich der Größe 0 ist, so wird anschließend an den Schritt 412 ein Schritt 413 ausgeführt, in welchem die Größe tsteilw dekrementiert wird. Im Anschluß an den Schritt 413 wird ein Schritt 410 ausgeführt.

Im Schritt 404 wird überprüft, ob der Größe Firk der Wert TRUE oder ob der Größe Filk der Wert TRUE zugewiesen ist. Ist die im Schritt 404 durchgeführte Abfrage erfüllt, so wird anschließend an den Schritt 404 ein Schritt 405 ausgeführt. Ist dagegen die im Schritt 404 enthaltene Abfrage nicht erfüllt, so wird anschließend an den Schritt 404 der Schritt 412 ausgeführt.

Im Schritt 405 wird überprüft, ob der Betrag der gleich definierten Vergleichsgröße omeganij größer gleich dem Betrag der gleich definierten Vergleichsgröße omegadelta ist. Wird im Schritt 405 festgestellt, daß der Betrag der gleich definierten Vergleichsgröße omeganij größer gleich dem Betrag der gleich definierten Vergleichsgröße omegadelta ist, so wird anschließend an den Schritt 405 ein Schritt 406 ausgeführt. Wird dagegen im Schritt 405 festgestellt, daß der Betrag der gleich definierten Vergleichsgröße omeganij nicht größer gleich dem Betrag der gleich definierten Vergleichsgröße omegadelta ist, so wird im Anschluß an den Schritt 405 der Schritt 410 ausgeführt.

Im Schritt 406 wird überprüft, ob die Größe omegastreufil größer als ein achter Schwellenwert S8 ist. An dieser Stelle sei bemerkt, daß die Größe omegastreufil wie bereits oben erwähnt, aus der Größe omegastreu durch Filterung hervorgeht. Wird im Schritt 406 festgestellt, daß die Größe omegastreufil größer als der Schwellenwert S8, der ein positiver Wert ist, ist, so wird im Anschluß an den Schritt 406 ein Schritt 408 ausgeführt. Wird dagegen im Schritt 406 festgestellt, daß die Größe omegastreufil nicht größer als der Schwellenwert S8 ist, so wird anschließend an den Schritt 406 ein Schritt 407 ausgeführt. Im Schritt 407 wird überprüft, ob der Betrag der Größe taykomp größer als ein Schwellenwert S9 ist. Der Schwellenwert S9 ist dabei ein positiver Wert. Wird im Schritt 407 festgestellt, daß der Betrag der Größe taykomp größer als der Schwellenwert S9 ist, so wird anschließend an den Schritt 407 der Schritt 408 ausgeführt. Für den Fall, daß die im Schritt 407 stattfindende Abfrage nicht erfüllt ist, wird im Anschluß an den Schritt 407 ein Schritt 410 ausgeführt.

Im Schritt 408 wird überprüft, ob die Größe tsteilw größer als ein Schwellenwert S10 ist. Der Schwellenwert S10 weist dabei einen positiven Wert auf. Wird im Schritt 408 festgestellt, daß die Größe tsteilw größer als der Schwellenwert S10 ist, wird anschließend an den Schritt 408 ein Schritt 410 ausgeführt. Wird dagegen im Schritt 408 festgestellt, daß die Größe tsteilw nicht größer als der Schwellenwert S10 ist, wird im Anschluß an den Schritt 408 ein Schritt 409 ausgeführt, in welchem die Größe tsteilw inkrementiert wird. Im Anschluß an den Schritt 409 wird ein Schritt 410 ausgeführt.

Im Schritt 410 wird überprüft, ob die Größe tsteilw größer als ein Schwellenwert S11 ist. Der Schwellenwert S11 ist dabei ein positiver Wert. An dieser Stelle sei bemerkt, daß der Wert des Schwellenwertes S11 kleiner als der Wert des Schwellenwertes S10 ist. Wird im Schritt 410 festgestellt, daß die Größe tsteilw größer als der Schwellenwert S11 ist, so wird anschließend an den Schritt 410 ein Schritt 411 ausgeführt, in welchem der Größe FSK der Wert TRUE zugewiesen wird, da aufgrund der im Schritt 410 durchgeführten Abfrage festgestellt wurde, daß sich das Fahrzeug auf einer quer zur Fahrtrichtung des Fahrzeuges geneigten Fahrbahn befindet. Im Anschluß an den Schritt 411 wird der Schritt 403 ausgeführt. Wird dagegen im Schritt 410 festgestellt, daß die Größe tsteilw nicht größer als der Schwellenwert S11 ist, so wird anschließend an den Schritt 410 ein Schritt 414 ausgeführt, in welchem der Größe FSK der Wert FALSE zugewiesen wird, da aufgrund der im Schritt 410 durchgeführten Abfrage festgestellt wurde, daß sich das Fahrzeug nicht auf einer quer zur Fahrtrichtung des Fahrzeuges geneigten Fahrbahn befindet. Im Anschluß an den Schritt 414 wird der Schritt 403 durchgeführt.

Abschließend sei bemerkt, daß die in der Beschreibung gewählte Form des Ausführungsbeispieles sowie die in den Figuren 2, 3a, 3b sowie 4 gewählte Darstellung der Flußdiagramme keine einschränkende Wirkung auf die erfindungswesentliche Idee darstellen soll.

**Patentansprüche**

1. Vorrichtung zur Regelung einer die Fahrzeugbewegung repräsentierenden Bewegungsgröße, wobei bei der Regelung der Bewegungsgröße eine durch dritte Mittel (113) festgestellte quer zur Fahrtrichtung des Fahrzeugs geneigte Fahrbahn berücksichtigt wird,

- welche erste Mittel (103, 104, 105) zur Erfassung verschiedener, die Fahrzeugbewegung beschreibender Größen enthält,

**dadurch gekennzeichnet,**

- **dass** zweite Mittel (106, 107, 108, 110) enthalten sind, mit denen wenigstens ausgehend von den mit den ersten Mitteln (103-105) erfaßten, verschiedenen, die Fahrzeugbewegung beschreibenden Größen, für wenigstens zwei der ersten Mittel (103-105) gleich definierte Vergleichsgrößen ermittelt werden, und
- **dass** zur Feststellung, ob sich das Fahrzeug auf einer quer zur Fahrtrichtung des Fahrzeuges geneigten Fahrbahn befindet, in den dritten Mitteln (113) wenigstens ausgehend von den wenigstens zwei gleich definierten Vergleichsgrößen Plausibilitätsabfragen durchgeführt werden.

2. Vorrichtung nach Anspruch 1, **dadurch gekennzeichnet, daß** das Ergebnis der mit den dritten Mitteln durchgeführten Feststellung bei der Ermittlung der gleich definierten Vergleichsgrößen berücksichtigt wird, und/oder daß das Ergebnis der mit den dritten Mitteln durchgeführten Feststellung in den dritten Mitteln zur Überwachung wenigstens eines der ersten Mittel berücksichtigt wird, und/oder daß das Ergebnis der mit den dritten Mitteln durchgeführten Feststellung in vierten Mitteln, die wenigstens ausgehend von den mit den ersten Mitteln erfaßten, verschiedenen, die Fahrzeugbewegung beschreibenden Größen, zur Regelung der die Fahrzeugbewegung repräsentierenden Bewegungsgröße, wenigstens Ansteuersignale für Aktuatoren erzeugen, mit denen wenigstens die auf die Räder des Fahrzeuges wirkenden Vortriebs- und/oder Bremsmomente beeinflußt werden, berücksichtigt wird.

3. Vorrichtung nach Anspruch 1, **dadurch gekennzeichnet, daß** die ermittelten, gleich definierten Vergleichsgrößen, eine physikalische Größe repräsentieren, die vorzugsweise einer, mit einem der im Fahrzeug enthaltenen erste Mittel erfaßten Größe, insbesondere einer Giergeschwindigkeit, entspricht.

4. Vorrichtung nach Anspruch 1, **dadurch gekennzeichnet, daß** in den dritten Mitteln ausgehend von den gleich definierten Vergleichsgrößen wenigstens einen Plausibilitätsabfrage durchgeführt wird, mit der festgestellt wird, ob die gleich definierten Vergleichsgrößen in Abhängigkeit ihres Wertes entsprechend wenigstens einer vorgegebenen Anordnung angeordnet sind, wobei die wenigstens eine vorgegebene Anordnung eine Kurvenfahrt auf einer quer zur Fahrtrichtung des Fahrzeuges geneigten Fahrbahn beschreibt, und/oder daß in den dritten Mitteln ausgehend von den gleich definierten Vergleichsgrößen wenigstens eine Größe ermittelt wird, die die Abweichung der gleich definierten Vergleichsgrößen untereinander beschreibt und/oder daß in den dritten Mitteln ausgehend von einer mit den ersten Mitteln erfaßten, die am Fahrzeug angreifende Querbeschleunigung beschreibenden Größe und einer Vergleichsgröße für die Querbeschleunigung eine Größe ermittelt wird, die die zeitliche Änderung der aus Querbeschleunigung und Vergleichsgröße gebildeten Differenz beschreibt, wobei wenigstens das Ergebnis der wenigstens eine Plausibilitätsabfrage und/oder die Größe, die die Abweichung der gleich definierten Vergleichsgrößen untereinander beschreibt und/oder die Größe, die die zeitliche Änderung der Differenz beschreibt, die aus der Größe, die die am Fahrzeug angreifende Querbeschleunigung beschreibt und der Vergleichsgröße für die Querbeschleunigung gebildet wird, bei der Feststellung, ob sich das Fahrzeug auf einer quer zur Fahrtrichtung des Fahrzeuges geneigten Fahrbahn befindet, berücksichtigt werden.

5. Vorrichung nach Anspruch 4, **dadurch gekennzeichnet, daß** wenigstens ausgehend von einem Teil der mit den ersten Mitteln erfaßten, verschiedenen, die Fahrzeugbewegung beschreibenden Größen, eine die Fahrzeugge-

EP 0 923 474 B1

schwindigkeit beschreibende Größe ermittelt wird, und/oder
daß wenigstens ausgehend von den gleich definierten Vergleichsgrößen eine Referenzgröße ermittelt wird, und
daß wenigstens ausgehend von der die Fahrzeuggeschwindkeit beschreibenden Größe und der Referenzgröße die Vergleichsgröße für die Querbeschleunigung ermittelt wird.

6. Vorrichtung nach Anspruch 4, **dadurch gekennzeichnet, daß** zur Bildung der Größe, die die Abweichung der gleich definierten Vergleichsgrößen untereinander beschreibt, ausgehend von jeder der gleich definierten Vergleichsgrößen jeweils eine Größe ermittelt wird, die die Abweichung dieser gleich definierten Vergleichsgröße zu den anderen gleich definierten Vergleichsgrößen beschreibt, und/oder
daß zur Bildung der Größe, die die Abweichung der gleich definierten Vergleichsgrößen untereinander beschreibt, für einen Teil der gleich definierten Vergleichsgrößen für jede dieser gleich definierten Vergleichsgrößen dieses Teils der gleich definierten Vergleichsgrößen jeweils eine Größe ermittelt wird, die die Abweichung dieser gleich definierten Vergleichsgröße zu den anderen gleich definierten Vergleichsgrößen dieses Teils der gleich definierten Vergleichsgrößen beschreibt.

7. Vorrichtung nach Anspruch 4, **dadurch gekennzeichnet, daß** die Größe, die die zeitliche Änderung der Differenz beschreibt, die aus der Größe, die die am Fahrzeug angreifende Querbeschleunigung beschreibt und der Vergleichsgröße für die Querbeschleunigung gebildet wird, als Zähler realisiert ist, der erhöht wird, wenn die zeitliche Änderung größer als ein erster Schwellenwert ist und der erniedrigt wird, wenn die zeitliche Änderung kleiner als ein zweiter Schwellenwert ist und der an einem vorgegebenen Wert, insbesondere 0 herangeführt wird, wenn die Differenz zeitlich nahezu unverändert bleibt.

8. Vorrichtung nach Anspruch 4, **dadurch gekennzeichnet, daß**, wenn ein Zähler größer als ein vorgegebener Schwellenwert ist, festgestellt wird, daß sich das Fahrzeug auf einer quer zur Fahrtrichtung des Fahrzeuges geneigten Fahrbahn befindet, wobei der Zähler wenigstens in Abhängigkeit folgender Bedingungen erhöht wird:

   - die wenigstens eine vorgegebene Anordnung der gleich definierten Vergleichsgrößen liegt vor, und/oder
   - die die Abweichung der gleich definierten Vergleichsgrößen untereinander beschreibende Größe ist größer als ein erster Schwellenwert oder der Betrag der Größe, die die zeitliche Änderung der Differenz beschreibt, die aus der Größe, die die am Fahrzeug angreifende Querbeschleunigung beschreibt und der Vergleichsgröße für die Querbeschleunigung gebildet wird, ist größer als ein zweiter Schwellenwert, und/oder

   wobei die Zahl wenigstens in Abhängigkeit folgender Bedingungen erniedrigt wird:

   - keine der vorgegebenen Anordnungen der gleich definierten Vergleichsgrößen liegt vor, und/oder
   - die die Abweichung der gleich definierten Vergleichsgrößen untereinander beschreibende Größe ist kleiner als ein erster Schwellenwert und der Betrag der Größe, die die zeitliche Änderung der Differenz beschreibt, die aus der Größe, die die am Fahrzeug angreifende Querbeschleunigung beschreibt und der Vergleichsgröße für die Querbeschleunigung gebildet wird, ist kleiner als ein zweiter Schwellenwert.

9. Vorrichung nach Anspruch 1, **dadurch gekennzeichnet, daß** wenigstens ausgehend von einem Teil der mit den ersten Mitteln erfaßten, verschiedenen, die Fahrzeugbewegung beschreibenden Größen, eine die Fahrzeuggeschwindigkeit beschreibende Größe ermittelt wird und
daß die Feststellung nur durchgeführt wird, wenn die die Fahrzeuggeschwindigkeit beschreibende Größe größer als ein zugehöriger Schwellenwert ist, und/oder
wenn der Betrag einer ersten gleich definierten Vergleichsgröße größer als der Betrag einer zweiten gleich definierten Vergleichsgröße ist.

10. Verfahren zur Regelung einer die Fahrzeugbewegung repräsentierenden Bewegungsgröße,

   - bei dem mit ersten Mitteln (103-105) verschiedene, die Fahrzeugbewegung beschreibende Größen erfasst werden
   - bei dem eine durch dritte Mittel (113) festgestellte quer zur Fahrtrichtung des Fahrzeugs geneigte Fahrbahn berücksichtigt wird,

   **dadurch gekennzeichnet, dass**

   - wenigstens ausgehend von den mit den ersten Mitteln (103,105) erfaßten, verschiedenen, die Fahrzeugbewegung beschreibenden Größen, für wenigstens zwei der ersten Mittel (103, 105) gleich definierte Vergleichsgrößen ermittelt werden, und

- dass zur Feststellung, ob sich das Fahrzeug auf einer quer zur Fahrtrichtung des Fahrzeuges geneigten Fahrbahn befindet, wenigstens ausgehend von den wenigstens zwei gleich definierten Vergleichsgrößen Plausibilitätsabfragen durchgeführt werden.

**Claims**

1. Device for regulating a movement parameter which represents the movement of a vehicle, an underlying surface which is determined using a third means (113) and is inclined transversely with respect to the direction of travel of the vehicle being taken into account in the regulation of the movement parameter,

   - which device contains first means (103, 104, 105) for sensing various parameters with describe the movement of the vehicle,

   **characterized**

   - **in that** said device contains second means (106, 107, 108, 110) with which, at least on the basis of the various parameters which are sensed using the first means (103-105) and which describe the movement of the vehicle, identically defined comparison parameters for at least two of the first means (103-105) are acquired, and
   - **in that**, in order to determine whether the vehicle is located on an underlying surface which is inclined transversely with respect to the direction of travel of the vehicle, plausibility interrogations are carried out in the third means (113) at least on the basis of the at least two identically defined comparison parameters.

2. Device according to Claim 1, **characterized in that** the result of the determination, carried out using the third means, is taken into account in the acquisition of the identically defined comparison parameters, and/or **in that** the result of the determination which is carried out using the third means is taken into account in the third means for the purpose of monitoring at least one of the first means, and/or **in that** the result of the determination which is carried out in the third means is taken into account in fourth means which, on the basis of the various parameters which are sensed using the first means and which describe the movement of the vehicle, generate, for the purpose of regulating the movement parameter which represents the movement of the vehicle, at least actuation signals for actuators with which at least the drive torques and/or brake torques which act on the wheels of the vehicle are influenced.

3. Device according to Claim 1, **characterized in that** the acquired identically defined comparison parameters represent a physical parameter which preferably corresponds to a parameter, in particular a yaw rate which is sensed using one of the first means contained in the vehicle.

4. Device according to Claim 1, **characterized in that** at least one plausibility interrogation is carried out in the third means on the basis of the identically defined comparison parameters, said plausibility interrogation being used to determine whether the identically defined comparison parameters are arranged so as to correspond to at least one predefined arrangement as a function of their value, the at least one predefined arrangement describing cornering on an underlying surface which is inclined transversely with respect to the direction of travel of the vehicle, and/or **in that** at least one parameter which describes the deviation from one another of the identically defined comparison parameters is acquired in the third means on the basis of the identically defined comparison parameters, and/or **in that** a parameter which describes the change over time of the difference formed from the transverse acceleration and the comparison parameter is acquired in the third means on the basis of a parameter which is sensed using the first means and describes the transverse acceleration acting on the vehicle, and a comparison parameter for the transverse acceleration, at least the result of the at least one plausibility interrogation and/or the parameter which describes the deviation from one another of the identically defined comparison parameters and/ or the parameter which describes the change over time of the difference which is formed from the parameter which describes the transverse acceleration acting on the vehicle, and the comparison parameter for the transverse acceleration, being taken into account in the determination of whether the vehicle is located on an underlying surface which is inclined transversely with respect to the direction of travel of the vehicle.

5. Device according to Claim 4, **characterized in that** a parameter which describes the velocity of the vehicle is acquired at least on the basis of some of the various parameters which are sensed using the first means and describe the movement of the vehicle, and/or **in that** a reference parameter is acquired at least on the basis of the identically defined comparison parameters, and **in that** the comparison parameter for the transverse acceleration is acquired at least on the basis of the parameter which describes the velocity of the vehicle, and the reference parameter.

6. Device according to Claim 4, **characterized in that**, in order to form a parameter which describes the deviation from one another of the identically defined comparison parameters, in each case one parameter which describes the deviation of this identically defined comparison parameter from the other identically defined comparison parameters is acquired on the basis of each of the identically defined comparison parameters, and/or **in that**, in order to form the parameter which describes the deviation from one another of the identically defined comparison parameters, for each of the identically defined comparison parameters of a portion of the identically defined comparison parameters a parameter is determined which describes the deviation of this identically defined comparison parameter from the other identically defined comparison parameters of this portion of the identically defined comparison parameters.

7. Device according to Claim 4, **characterized in that** the parameter, which describes the change over time of the difference which is formed from the parameters, which describes the transverse acceleration acting on the vehicle and the comparison parameter for the transverse acceleration is implemented as a counter which is incremented if the change over time is greater than a first threshold value, and which is decremented if the change over time is smaller than a second threshold value, and which is approximated to a predefined value, in particular 0 if the difference remains virtually unchanged over time.

8. Device according to Claim 4, **characterized in that** if a counter is greater than a predefined threshold value, it is determined that the vehicle is located on an underlying surface which is inclined transversely with respect to the direction of travel of the vehicle, the counter being incremented at least as a function of the following conditions:

   - the at least one predefined arrangement of the identically defined comparison parameters is present, and/or
   - the parameter which describes the deviation from one another of the identically defined comparison parameters is greater than a first threshold value, or the absolute value of the parameter which describes the change over time of the difference which is formed from the parameter which describes the transverse acceleration acting on the vehicle and the comparison parameter for the transverse acceleration is greater than a second threshold value, and/or the number being decremented at least as a function of the following conditions:

   - none of the predefined arrangements of the identically defined comparison parameters is present, and/or
   - the parameter which describes the deviation from one another of the identically defined comparison parameters is smaller than a first threshold value, and the absolute value of the parameter which describes the change over time of the difference which is formed from the parameter which describes the transverse acceleration acting on the vehicle and a comparison parameter for the transverse acceleration is smaller than a second threshold value.

9. Device according to Claim 1, **characterized in that** a parameter which describes the velocity of the vehicle is acquired at least on the basis of a portion of the various parameters which are sensed using the first means and which describe the movement of the vehicle, and
**in that** the determination is carried out only if the parameter which describes the velocity of the vehicle is greater than an associated threshold value, and/or if the absolute value of the first identically defined comparison parameter is greater than the absolute value of a second identically defined comparison parameter.

10. Method for regulating a movement parameter which represents the movement of the vehicle,

   - in which the various parameters which describe the movement of the vehicle are sensed using first means (103-105),
   - in which an underlying surface which is determined by third means (113) and is inclined transversely with respect to the direction of travel of the vehicle is taken into account,

   **characterized in that**

   - comparison parameters which are defined identically for at least two of the first means (103-105) are acquired at least on the basis of the various parameters which are sensed using the first means (103-105) and which describe the movement of the vehicle, and

- **in that**, in order to determine whether the vehicle is located on an underlying surface which is inclined transversely with respect to the direction of travel of the vehicle, plausibility interrogations are carried out at least on the basis of the at least two identically defined comparison parameters.

**Revendications**

1.  Dispositif pour réguler une grandeur de mouvement représentant le mouvement d'un véhicule,

    - dans lequel la régulation de la grandeur de mouvement tient compte d'une chaussée inclinée, transversalement à la direction de déplacement du véhicule, et qui est déterminée par des troisièmes moyens (113), et
    - comportant des premiers moyens (103, 104, 105) pour détecter différentes grandeurs décrivant le mouvement du véhicule,

    **caractérisé en ce que**

    - il comprend des seconds moyens (106, 107, 108, 110) à l'aide desquels, au moins en partant des différentes grandeurs décrivant le mouvement du véhicule, saisies par les premiers moyens (103-105), on détermine des grandeurs de comparaison définies de la même manière pour au moins deux des premiers moyens (103-105) et
    - pour déterminer si le véhicule se trouve sur une chaussée inclinée transversalement à sa direction de déplacement, on effectue des interrogations de plausibilité dans les troisièmes moyens, au moins en partant des au moins deux grandeurs de comparaison définies de la même manière.

2.  Dispositif selon la revendication 1,
    **caractérisé en ce que**
    le résultat de la constatation effectuée à l'aide des troisièmes moyens est pris en compte pour déterminer les grandeurs de comparaison définies de la même manière et/ou
    on tient compte du résultat de la constatation faite à l'aide des troisièmes moyens dans les troisièmes moyens pour surveiller au moins l'un des premiers moyens, et/ou on tient compte du résultat de la constatation effectuée à l'aide des troisièmes moyens dans des quatrièmes moyens, qui, au moins en partant des différentes grandeurs décrivant le mouvement du véhicule, saisies par les premiers moyens, génèrent au moins des signaux de commande pour des actionneurs pour réguler les grandeurs de mouvement représentant le mouvement du véhicule, et à l'aide desquels on influence le couple d'entraînement et/ou de freinage agissant sur les roues du véhicule.

3.  Dispositif selon la revendication 1,
    **caractérisé en ce que**
    les grandeurs de comparaison déterminées, définies de la même manière, représentent une grandeur physique qui correspond de préférence à une grandeur saisie à l'aide de l'un des premiers moyens contenus dans le véhicule, en particulier la vitesse de lacet.

4.  Dispositif selon la revendication 1,
    **caractérisé en ce que**
    dans les troisièmes moyens, partant de grandeurs de comparaison définies de la même manière, on effectue au moins une interrogation de plausibilité à l'aide de laquelle on constate si les grandeurs de comparaison définies de la même manière sont disposées en fonction de leur valeur suivant au moins une disposition prédéterminée, qui décrit un trajet en courbe sur une chaussée inclinée par rapport à la direction de déplacement du véhicule, et/ou dans les troisièmes moyens, partant de grandeurs définies de la même manière, on détermine au moins une grandeur qui décrit la déviation entre elles des grandeurs de comparaison définies de la même manière, et/ou dans les troisièmes moyens, partant d'une grandeur saisie par les premiers moyens et décrivant l'accélération transversale appliquée au véhicule, et d'une grandeur de comparaison pour l'accélération transversale, on détermine une grandeur qui décrit la variation dans le temps de la différence entre l'accélération transversale et la grandeur de comparaison,
    et au moins le résultat d'au moins une interrogation de plausibilité et/ou la grandeur qui décrit la déviation entre les grandeurs de comparaison définies de la même manière et/ou la grandeur qui décrit la variation dans le temps de la différence formée à partir de la grandeur de l'accélération transversale appliquée au véhicule et de la grandeur de comparaison de l'accélération transversale, est pris en compte dans la constatation de savoir si le véhicule se trouve sur une chaussée inclinée transversalement à la direction de déplacement du véhicule.

5. Dispositif selon la revendication 4,
   **caractérisé en ce qu'**
   au moins à partir d'une partie des différentes grandeurs saisies par les premiers moyens et décrivant le mouvement du véhicule, on détermine une grandeur décrivant la vitesse du véhicule, et/ou
   au moins à partir des grandeurs de même définition on détermine une grandeur de référence, et
   au moins en partant de la grandeur décrivant la vitesse du véhicule et de la grandeur de référence on détermine la grandeur de comparaison de l'accélération transversale.

6. Dispositif selon la revendication 4,
   **caractérisé en ce que**
   pour former la grandeur décrivant la déviation entre elles des grandeurs de comparaison de même définition, partant de chacune des grandeurs de comparaison définies de la même manière, on détermine chaque fois une grandeur décrivant la déviation de cette grandeur de comparaison de même définition et des autres grandeurs de comparaison de même définition, et/ou
   pour former la grandeur qui décrit la déviation des grandeurs de même définition entre elles, pour une partie des grandeurs de comparaison de même définition, pour chacune de ces grandeurs de même définition de cette partie des grandeurs de même définition, on détermine chaque fois une grandeur décrivant la déviation de ces grandeurs de même définition par rapport aux autres grandeurs de même définition de cette partie des grandeurs de comparaison de même définition.

7. Dispositif selon la revendication 4,
   **caractérisé en ce que**
   la grandeur qui décrit la variation dans le temps de la différence correspondant à la grandeur décrivant l'accélération transversale appliquée au véhicule et la grandeur de comparaison de l'accélération transversale, est réalisée comme compteur qui augmente si la variation dans le temps est supérieure à un premier seuil et qui diminue si la variation dans le temps est inférieure à un second seuil, et qui est mis à une valeur déterminée, notamment 0, si la différence reste pratiquement inchangée dans le temps.

8. Dispositif selon la revendication 4,
   **caractérisé en ce que**
   si un compteur est supérieur à un seuil prédéterminé, on constate que le véhicule se trouve sur une chaussée inclinée transversalement à la direction de déplacement du véhicule, le compteur augmentant au moins selon les conditions suivantes :

   - on est en présence d'au moins une disposition prédéterminée des grandeurs de comparaison de même définition et/ou
   - la grandeur qui décrit la déviation des grandeurs de comparaison de même définition entre elles est supérieure à un premier seuil ou encore l'amplitude de la grandeur qui décrit la variation dans le temps de la différence résultant de la grandeur décrivant l'accélération transversale du véhicule et la grandeur de comparaison de l'accélération transversale, est supérieure à un second seuil, et/ou

   le nombre est abaissé au moins en fonction de l'une des conditions suivantes :

   - aucune des dispositions prédéterminées des grandeurs de comparaison de même définition existe, et/ou
   - la grandeur qui décrit la déviation des grandeurs de comparaison de même définition entre elles est inférieure à un premier seuil et l'amplitude de la grandeur qui décrit la variation dans le temps de la différence de la grandeur décrivant l'accélération transversale appliquée au véhicule et de la grandeur de comparaison de l'accélération transversale est inférieure à un second seuil.

9. Dispositif selon la revendication 1,
   **caractérisé en ce qu'**

   - au moins en partant d'une partie des grandeurs saisies par les premiers moyens décrivant le mouvement du véhicule, on détermine une grandeur décrivant la vitesse du véhicule, et
   - on effectue la constatation seulement si la grandeur décrivant la vitesse du véhicule est supérieure à un seuil correspondant, et/ou si l'amplitude d'une première grandeur de comparaison de même définition est supérieure à l'amplitude d'une seconde grandeur de même définition.

10. Procédé pour réguler une grandeur de mouvement représentant le mouvement du véhicule, selon lequel

- avec les premiers moyens (103-105) on saisit différentes grandeurs décrivant le mouvement du véhicule,
- on tient compte d'une chaussée inclinée transversalement à la direction de déplacement du véhicule par des troisièmes moyens (113),

**caractérisé en ce que**

- au moins à partir des grandeurs différentes saisies par les premiers moyens (103-105), décrivant le mouvement du véhicule, pour au moins deux des premiers moyens (103-105), on détermine des grandeurs de comparaison de même définition, et
- pour déterminer si le véhicule se trouve sur une chaussée inclinée transversalement à la direction de déplacement du véhicule, au moins en partant d'au moins deux grandeurs de comparaison de même définition on effectue des interrogations de plausibilité.

Fig. 1

EP 0 923 474 B1

deltamess

omegamess

omegamess

deltamess — omegadelta — 111 — omegastreu — FSK — 114
deltaref — Fomega
106 — Firk

omegamess — omegakorr — Filk — mot2
omegaref — omegaref
107 — omegaay — ST1

aymess — omegaay — omeganij — ST2
ayref — vf
108 — 113 — mot1 — 116

102

103

104

omegaref — 115

nvrmess
105vr

nvlmess — vf — 112
105vl — 109

nhrmess — vf
105hr — omeganij
110

nhlmess
105hl — 101

117vr
Avr

117vl
Avl

117hr
Ahr

117hl
Ahl

# Fig. 2

Start — 201

taykomp = 0 — 202

aykomp = aymess - ayref1 — 203

$\frac{d}{dt}$(aykomp)>S1 ? — 204

$\frac{d}{dt}$(aykomp)<S2 ? — 205

$|\frac{d}{dt}$(aykomp)| <S3 ? — 206

taykomp>0 ? — 207

taykomp<0 ? — 208

Ausgabe taykomp — 209

taykomp<S6 ? — 210

taykomp>S5 ? — 212

taykomp-1 — 214

taykomp+1 — 215

taykomp+1 — 211

taykomp-1 — 213

# Fig. 3a

Start — 301

omegakorr > omeganij ? — 302 — N / Y

omegakorr > omegadelta ? — 303 — N / Y

omeganij > omegaay ? — 304 — N / Y

omegadelta > omegaay ? — 305 — N / Y

Firk = TRUE — 306

Firk = FALSE — 307

Ende — 308

# Fig. 3b

Start — 309

omegakorr < omeganij ? — 310
— N
— Y

omegakorr < omegadelta ? — 311
— N
— Y

omeganij < omegaay ? — 312
— N
— Y

omegadelta < omegaay ? — 313
— N
— Y

Filk = TRUE — 314

Filk = FALSE — 315

Ende — 316

# Fig. 4